(19) Europäisches Patentamt
European Patent Office
Office européen des brevets

(11) Publication number: 0 051 678 B1

(12) **EUROPEAN PATENT SPECIFICATION**

(45) Date of publication of patent specification: **03.09.86**

(51) Int. Cl.[4]: **C 08 L 27/06**, C 08 J 9/16, C 08 F 2/00

(21) Application number: **81901640.3**

(22) Date of filing: **07.05.81**

(86) International application number: **PCT/US81/00611**

(87) International publication number: **WO 81/03333 26.11.81 Gazette 81/28**

# (54) PROCESS FOR PRODUCING SPHERICAL AND POROUS VINYL RESIN PARTICLES.

(30) Priority: **19.05.80 US 151060**

(43) Date of publication of application: **19.05.82 Bulletin 82/20**

(45) Publication of the grant of the patent: **03.09.86 Bulletin 86/36**

(84) Designated Contracting States: **DE FR GB NL SE**

(56) References cited:
**FR-A-2 319 681**
**FR-A-2 356 675**
**US-A-3 228 919**
**US-A-3 340 243**
**US-A-3 423 352**
**US-A-3 620 988**
**US-A-3 706 722**
**US-A-3 907 730**

(73) Proprietor: **The B.F. GOODRICH Company**
**Dept. 0015 WHB-6 500 South Main Street**
**Akron, Ohio 44318 (US)**

(72) Inventor: **BASU, Pijus Kanti**
**6580 Carriage Hill Drive**
**Brecksville, OH 44141 (US)**

(74) Representative: **von Kreisler, Alek, Dipl.-Chem. et al**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 051 678 B1

## Description

### Background of the invention

Many polymerizable monomeric materials, and particularly vinyl chloride, are being polymerized today on a large scale commercially either in suspension media or in aqueous dispersion or emulsion, that is, latex form, employing various colloidal suspension agents, emulsifiers or soaps, and/or synthetic detergent-type dispersing agents. In these methods of polymerization, and particularly in suspension polymerization, agitation, which is usually vigorous, is depended on to suspend and/or disperse the monomer particles or droplets throughout the reaction media and to maintain such suspension or dispersion during the polymerization reaction and to assist in heat transfer to the reactor cooling surfaces. However, in most instances, polymer particles produced in accordance with these processes are not uniform in size and shape. This is due, in most instances, to the instability of the monomer dispersion which causes agglomeration of the polymerizing particles. In subsequent processing of these polymers, such as, for example, polyvinyl chloride (PVC), it is desirable to have uniform size and shape in the polymer particles.

Various polymerization processes, and modifications of existing processes, have been heretofore proposed to obtain spherical unagglomerated resin particles of uniform size. For example, one very successful method has been proposed and described in U.S. Patent No. 3,620,988. In said patented method, a monomeric material, such as vinyl chloride, of low solubility in water, containing a monomer-soluble free radical type catalyst, is suspended as discrete droplets of a desired size in an aqueous medium thickened with a water-insoluble polymeric gellation agent which imparts plastic flow properties to such medium. The polymerization reaction is then carried out using a batch or continuous process under substantially quiescent conditions, that is, in the absence of turbulence or the absence of shearing forces sufficient to deform the suspended droplets of monomer and/or to damage the polymer bead at any stage of conversion. However, when polymerizing vinyl chloride by such a process, the uniform beads of PVC that are formed are normally clear and glassy in nature and do not have the desired porosity, which is desirable in subsequent operations involving the finished polymer.

There are many cases where porous polymer particles or beads are desirable, such as where the polymer, such as PVC, is to be employed in making plastisols and in extrusion operations. Porous beads would also be desirable in the case of PVC where, because of Government regulations, it is necessary to remove substantially all of the unreacted vinyl chloride therefrom. Porous polymer beads or particles would greatly facilitate such removal.

Another real problem in the manufacture of vinyl resins is polymer buildup on the inner surfaces of the reactor during the polymerization reaction. This is particularly prevalent in the commercial production of vinyl chloride polymers when the same are produced in the form of discrete particles by polymerization in an aqueous suspension system. When employing such a system, the monomer(s) are maintained in the form of small discrete droplets by the use of suspending agents and agitation. When the reaction is complete, the resultant polymer is washed and dried. These aqueous suspension system polymerization reactions are usually conducted under pressure in metal reactors, or glass-lined reactors, equipped with baffles and high speed agitators. However, as pointed out above, these suspension systems under many circumstances are unstable and during the polymerization reaction, the polymer builds up on the interior surfaces of the polymerization reactor, including the surfaces of the baffles and agitator. Obviously, this polymer buildup must be removed since it results in further formation of polymer buildup on the reactor surfaces which results in a crust that adversely affects heat transfer and contaminates the polymer being produced. Removal of such polymer buildup is difficult and costly and the desirable way of eliminating the polymer buildup is providing a means of polymerization which substantially eliminates its formation in the first place.

Thus a process which is capable of producing vinyl resin particles which are spherical and porous throughout, and which will also substantially eliminate polymer buildup in the reactor, is most desirable.

### Summary of the invention

In the process of the present invention there is first formed a dispersion or emulsion comprised of the monomer or monomers to be polymerized, a surfactant, or surfactant system, and a monomer-soluble free radical yielding polymerization catalyst, in an aqueous medium containing a water-insoluble suspending or dispersing agent (dispersant) comprising a water-insoluble cross-linked polymer of one or more carboxylic acid monomers with a polyunsaturated crosslinking monomer having a plurality of terminally unsaturated polymerizable groups. Said dispersion is formed using high agitation at a temperature below the reaction temperature. The dispersion is partially neutralized with an alkali and then polymerized with stirring to a conversion of about 10% to about 30%, said stirring being substantially less than that used in making the dispersion and then continuing the reaction to completion with increased stirring but no greater than that used in making the dispersion. The resultant polymer particles are non-agglomerated, spherical, highly porous and have the same size distribution as the original liquid dispersion. Thus, by starting with a dispersion of uniform droplet size, one can obtain polymer particles which are also uniform. There is substantially no polymer buildup on the reactor surfaces.

Detailed description

While the present invention is described hereinafter with regard to the polymerization of vinyl chloride, it is to be understood that this is merely for purposes of illustration and convenience since the present process may likewise be employed in the polymerization of any polymerizable ethylenically unsaturated monomer or monomers and particularly where, under normal conditions, undesirable polymer buildup occurs. As examples of such monomers, there may be named other vinyl halides and vinylidene halides, such as vinyl bromide, vinyl fluoride, vinylidene chloride, etc., vinylidene monomers having at least one terminal $CH_2=C<$ grouping, such as acrylic acid, methacrylic acid, acrylonitrile, vinyl acetate, and the like; esters of acrylic acid, for example, methyl acrylate, ethyl acrylate, butyl acrylate, octyl acrylate, cyanoethyl acrylate, and the like; esters of methacrylic acid, such as methyl methacrylate, ethyl methacrylate, butyl methacrylate, and the like; styrene and styrene derivatives including α-methyl styrene, vinyl toluene, chlorostyrene; vinyl naphthalene; diolefins including butadiene, isoprene, chloroprene, and the like; and mixtures of any of these types of monomers and other unsaturated polymerizable olefinic monomers copolymerizable therewith; and other polymerizable olefinic monomers of the types known to those skilled in the art.

The present invention, however, is particularly applicable to the polymerization of vinyl chloride either alone or in admixture with one or more other vinylidene monomers having at least one terminal $CH_2=C<$ grouping, copolymerizable therewith in amounts as great as about 80% or more by weight, based on the weight of the monomer mixture.

The monomer-soluble or oil-soluble catalysts that may be used in the polymerization process of the present invention are the alkanoyl, aroyl, alkaroyl, aralkanoyl diperoxides and monohydroperoxides, azo compounds, peroxy esters, percarbonates, and other free radical type catalysts. As examples of such catalysts, there may be named benzoyl peroxide, lauryl peroxide, diacetyl peroxide, cumene hydroperoxides, methyl ethyl ketone peroxide, diisopropylbenzene hydroperoxide, 2,4-dichlorobenzoyl peroxide, naphthoyl peroxide, t-butyl perbenzoate, di-t-butyl perphthalate, isopropyl percarbonate, acetyl cyclohexane sulfonyl peroxide, di-secondary butyl peroxydicarbonate, t-butyl peroxyneodecanoate, di-normal propyl peroxydicarbonate, azo - bis - isobutyronitrile, α,α' - azodiisobutyrate and 2,2' - azo - bis - (2,4 - dimethyl valeronitrile). The particular free radical catalyst employed will depend upon the monomer(s) being polymerized, the molecular weight and color requirements of the polymer and the temperature of polymerization. Insofar as the amount of catalyst employed is concerned, it has been found that an amount in the range of 0.005% to 1.0% by weight, based on the weight of the monomer or monomers being polymerized, is satisfactory. However, it is preferred to employ an amount of catalyst in the range of 0.01% to 0.20% by weight.

An important aspect of the instant invention is the water-insoluble dispersant that is employed in order to stabilize the dispersed monomer droplets against coalescence in an amount of 0,02 to 2,0% by weight, based on the weight of monomer. The dispersant employed is a water-insoluble, crosslinked polymer of one or more carboxylic acid monomers with a polyunsaturated crosslinking monomer having a plurality of terminally unsaturated polymerizable groups, for example, a crosslinked polyacrylic acid polymer. The crosslinking is necessary since an uncrosslinked polyacrylic acid polymer will produce a highly agglomerated charge, that is, due to an unstable environment, the polymer particles coalesce producing the agglomerates. Due to the crosslinking the polymers are incapable of forming a true solution in water and thus are classified as water-insoluble. However, the structure of the polymer must be such that it has enough affinity for water to swell appreciably in an aqueous medium, thus thickening the water phase but not to the extent that it cannot be agitated, as hereinafter described. Polymers that have little or no affinity for water and do not swell to any measurable degree, are not suitable for the purposes of the present invention.

After forming the dispersion or emulsion of the polymerization reaction ingredients and prior to polymerization thereof, it is necessary, and most important to partially neutralize the reaction medium, and mainly the dispersant therein, in order to insure the stabilization of the monomer droplets therein during the subsequent stirred reaction period. This neutralization is accomplished by adding to the reaction medium, prior to the start of the polymerization reaction, a water-soluble base, such as sodium hydroxide, in order to adjust the pH of said medium in a range of 4.0 to 7.0. This adjustment in pH is made in order to obtain sufficient suspension value, expressed in terms of the "Brookfield yield value", in the medium, as described hereinafter. The viscosity of the polymerization medium can be regulated by adjusting the amount of dispersant added thereto and its degree of neutralization.

The amount of dispersant that is required for proper suspension value is easily determined; The minimum suspension value required in aqueous polymerization medium for suspension stability with any given monomeric material is calculated as minimum Brookfield Yield Value (BYV) and depends on several factors, namely, (1) the density difference between the monomeric and aqueous phases, labeled $D-D_0$ and expressed as grams/$cm^3$; (2) the desired or actual radius (R) of the suspended monomer droplet, expressed in cm.; and (3) the acceleration of gravity (g) expressed in cm./$sec.^2$, usually 980 cm./$sec.^2$. The minimum Brookfield Yield Value (BYV) for permanent suspension can be calculated by the formula:

$$\text{(I)} \qquad BYV=[25.6R(D-Do)g]^{2/3}$$

wherein the terms are as identified above.

In practice, it is desirable to employ aqueous media having a BYV in excess of the calculated minimum in order to make certain that suspension stability is easily achieved and is fully maintained throughout the reaction. It is satisfactory to employ aqueous polymerization media having a measured or actual BYV at least 50% and preferably from 200% to 600% or more, higher than the calculated minimum.

Actually, BYV values are measured or calculated from rheological data obtained by the use of the Brookfield RVT Viscometer, operated at the temperature to be utilized in the polymerization, whereby one measures the Brookfield apparent viscosity (BAV) in centipoises at a rotation speed of 0.5 $min^{-1}$ and 1.0 $min^{-1}$. If these data are plotted against shear rate and the curve extrapolated to zero shear rate, the BYV is obtained directly. However, the minimum BYV for permanent stability can be approximated from the formula:

$$\text{(II)}\quad \text{Approx. BYV} = \frac{\text{BAV@0.5rpm—BAV—1.0rpm}}{100}$$

In many cases, a useful and easily measured and calculated viscometric parameter is the ratio (R') of the BYV divided by the apparent Brookfield viscosity measured at a speed of rotation of 20 $min^{-1}$. This ratio will vary somewhat depending on the magnitude of BYV. The formula (I) above incorporates an empirical correction factor which compensates for this error.

In general, BYV values with the dispersants of the present invention will be, at a minimum, in the range of 20 to 50 for the usual monomers and particle sizes. Most often, with many of these monomers, the practical operating range will be from 50 to 120. The Brookfield apparent viscosity at 20 $min^{-1}$ of the polymerization media of such BYV will be in the range of 760 to 1500 centipoises.

The carboxylic acid monomers, which are useful in preparing the crosslinked polymeric dispersants are those which contain at least one active carbon to carbon double bond in the α,β-position with respect to a carboxyl group having the formula

R'' R'''

(a) R'—C=C—COOH

within R' is hydrogen or a —COOH group, and each of R'' and R''' is a hydrogen or a monovalent substituent group which is linked to one of the doubly bonded carbon atoms. Carboxylic acids within this definition include acids, such as acrylic and, wherein the double bond is terminal thusly

(b) $CH_2$=C—COOH

or the dicarboxylic acids, such as maleic acid, and other anhydrides having the general formula

(c) 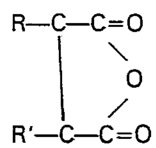

wherein R and R' are monovalent substituent groups and especially those selected from the group consisting of hydrogen, halogen, alkyl, aryl, alkaryl, aralkyl, and cycloaliphatic radicals.

Included within the class of carboxylic acids, shown by generic formula (a) above, are widely divergent materials, such as acrylic acid itself, methacrylic acid, ethacrylic acid, α- and β-chloro- and bromo-acrylic acids, crotonic acid, maleic acid, and itaconic acid.

Polymerizable carboxylic anhydrides include any of the anhydrides of the above acids, including mixed anhydrides, and those shown by generic formula (C) above, including maleic anhydride. In many cases it is preferred to copolymerize an anhydride monomer with a comonomer, such as methyl vinyl ether or styrene.

In the present invention, it is preferred to employ polymeric dispersants which are derived from polymers produced by the polymerization of the α,β-monoolefinically unsaturated carboxylic acids. The preferred carboxylic acids are those derived from the acrylic acids and α-substituted acrylic acids having the general formula

R

(d) $CH_2$=C—COOH

wherein R is a monovalent substituent selected from the group consisting of hydrogen, halogen, hydroxyl, carboxyl, amide, ester, lactone, and lactam groups.

The most preferred polymeric dispersants are those prepared from the lightly crosslinked interpolymers of acrylic acid since these are the most efficient. The crosslinking agents which may be employed with any of the carboxylic monomers, or mixtures thereof, may be any compound, not necessarily monomeric in nature, containing two or more terminal polymerizable $CH_2=C<$ groups per molecule. Examples of this class of materials include polyunsaturated-hydrocarbons, -polyethers, -polyesters, -nitriles, -acids, -acid anhydrides, -ketones, -alcohols and polyunsaturated compounds of this class incorporating one or more of these functional groups. Specifically, there may be used divinyl benzene, divinyl naphthalene, low molecular weight and soluble polymerized dienes, such as, polybutadiene and other soluble homopolymers of open chain aliphatic conjugated dienes, which soluble polymers do not contain any appreciable number of conjugated double bonds, and other polyunsaturated hydrocarbons; polyunsaturated esters, ester-amides and other ester derivatives, such as ethylene glycol diacrylate, ethylene glycol dimethacrylate, allyl acrylate, methylene bis-acrylamide, methylene bismethacrylamide, triacrylyl triazine, and hexallyl trimethylene trisulfone; polyunsaturated ethers, such as divinyl ether, diallyl ether, dimethyl allyl ether, diallyl ethylene glycol ether, diallyl, triallyl and other polyallyl ethers of glycerol, butene-1,2-diol, 1-phenyl-1,2,3-propanetriol, the polyalyl, -vinyl, and -crotyl poly ethers containing from 2 to 7 of these alkenyl ether groupings per molecule and made from polyhydric alcohols, such as the carbohydrate sugars, and the so-called "sugar alcohols", including erythritol, pentaerythritol, arabitol, iditol, mannitol, sorbitol, inositol, raffinose, glucose, and sucrose, and other polyhydroxy carbohydrate derivatives; the corresponding polyalkenyl silanes, such as the vinyl and allyl silanes. Of this large class of crosslinking agents, the polyalkenyl polyethers of the carbohydrate sugars, sugar alcohols, and other polyhydroxy carbohydrate type derivatives containing from 2 to 7 alkenyl ether groups per molecule are particularly useful. Such materials are easily prepared by a Williamson-type synthesis involving the reaction of an alkenyl halide, such as allyl chloride, allyl bromide, methallyl chloride, crotyl chloride, and the like, with a strongly alkaline solution of one or more of the polyhydroxy carbohydrate derivatives.

In the monomeric mixture for making the crosslinked polymers employed as dispersants in the polymerization process of the present invention, the two essential monomeric materials should be present in certain proportions, although the exact proportions will vary considerably depending on the characteristics desired in the polymer. Small amounts of the polyalkenyl polyether copolymerize quite readily with carboxylic monomers and the crosslinking effect of the polyalkenyl polyether on the carboxylic monomer is so strong that as little as 0.1% by weight thereof, based on the weight of the total mixture, produces a great reduction in the water- and solvent-solubility of the resulting crosslinked polymer. When 0.1% to 4.0%, more preferably 0.2% to 2.5%, by weight of the polyether is utilized, water-insoluble polymers are obtained, especially with acrylic acids, which are extremely water-sensitive. Useful dispersing agents are also obtained when 0.1% to 6.0%, and preferably 0.2% to 5.0%, by weight of the polyether is copolymerized with maleic anhydride. In the dual copolymer, or two-component polymer, this means that the remainder of the monomeric mixture will be the carboxylic monomer.

The monomeric proportions employed in the production of multi-component interpolymers may vary in a somewhat similar manner. However, it is generally desirable to utilize as much of the carboxylic monomer or monomers and as little of the other monomeric constituents as is consistent with the desired water-insolubility and other properties. In these interpolymers, therefore, the carboxylic monomer or monomers should never be less than 25%, and preferably not less than 40%, by weight of the total monomeric mixture. Multi-component polymers may be made from monomeric mixtures comprising from 25% to 95% of a carboxylic monomer, such as acrylic acid, 0.1% to 30% of a polyalkenyl polyether, such as polyallyl polyether of sucrose, and 5.0% to 74.9% of an additional monomer or monomers. Preferred multi-component polymers are the tripolymers resulting from the polymerization of monomeric mixtures containing, respectively, from 40% to 95% by weight of acrylic acid, 0.20% to 2.5% by weight of polyallyl polyether, such as that of sucrose, and 4% to 59% of an additional monomer or monomers, such as maleic anhydride, N-methyl acrylamide, methyl vinyl ether, ethyl vinyl ether, n-butyl vinyl ether, and the like, and mixtures of maleic anhydride, a vinyl alkyl ether, such as vinyl methyl ether, and a polyallyl polyether, in which the sum of the moles of vinyl ether and polyallyl polyether is substantially equivalent to the molar quantity of maleic anhydride present. It should be borne in mind that in the above proportions, if a maximum amount of two of the monomers are utilized, that somewhat less than maximum amounts of the other monomers must be utilized.

Suitable for use as additional monomers in the production of multi-component polymers are monoolefinic vinylidene monomers containing one terminal $CH_2=C<$ group, such as styrene, the chloro- and ethoxystyrenes, etc., acrylamide, N-methyl-acrylamide, N,N-dimethyl acrylamide, acrylonitrile, methacrylonitrile, methyl acrylate, ethyl acrylate, 2-ethylhexylacrylate, methyl methacrylate, vinyl acetate, vinyl benzoate, vinyl pyridine, vinyl chloride, vinylidene chloride, vinylidene chlorobromide, vinyl carbazole, vinyl pyrrolidone, methyl vinyl ether, ethyl vinyl ether, n-butyl vinyl ether, methyl vinyl ketone, ethylene, isobutylene, dimethyl maleate, and diethyl maleate. In addition to the above monoolefinic monomers, many of the divinyl dialkenyl or other polyfunctional esters, amides, ethers, and ketones may be used in the production of multi-component polymers, especially those polyfunctional monomers which nominally function as crosslinking or insolubilizing monomers. Of the above additional monomers, N-methyl acrylamide, methyl vinyl ether, ethyl vinyl ether and divinyl ether having been found particularly

useful in the production of the unneutralized crosslinked interpolymers for use as water-insoluble dispersants in the polymerization process of the instant invention.

One important aspect of the present invention is the choice of surfactant or surfactant system. It is necessary that the surfactant or surfactants chosen for use in the invention be such that at least one of the surfactants contain one or more poly(ethylene oxide) (PEO) segments. It has been found that the water-insoluble crosslinked suspending agent in the reaction medium is an indispensable part of the surfactant system. The ability of the surfactant to prevent "drop sticking", that is, to prevent the monomer droplets from coalescing, is due to the complexing, or association, of the same with the suspending agent. This, of course, prevents agglomeration in the finished product or polymer. It is believed that the key to the mechanism for preventing agglomeration lies in the hydrogen bonding interaction between the PEO segments of the surfactant and the unneutralized —COOH groups on the suspending agent chains. It has been found that the satisfactory amount of surfactant or surfactants, useful in the present invention, will be in the range of 0.005% to 1.0% by weight based on the weight of the monomer or monomers to be polymerized. Preferably, an amount of such surfactant(s) in the range of 0.02% to 0.5% is employed.

With respect to the surfactants, it has been demonstrated that there is a minimum length that the PEO segments must have in order that they can be effective in complexing with the water-insoluble crosslinked dispersants in the reaction medium and thus prevent drop sticking. This minimum length has been found to be between 11 and 15 PEO (poly(ethylene oxide)) units. Surfactants having shorter PEO segment lengths are only partially effective in most cases and the resin particles produced from a stirred reaction are larger and have a broader size distribution. This is believed to be due to partial drop agglomeration in the early stages of the reaction.

Among the surfactants useful for the purpose of preventing the monomer droplets from coalescing are those falling within the following generic classes: (1) polyoxyethylene alkylphenols; (2) polyoxyethylene alcohols; (3) polyoxyethylene esters of fatty acids; (4) polyoxyethylene alkylamines; (5) polyoxyethylene alkylamides; and (6) polyalkylene oxide block copolymers. As examples of surfactants in the above-named classes there may be named the following: polyoxyethylene (20) sorbitan monooleate, polyoxyethylene (20) sorbitan monolaurate, polyoxyethylene (20) sorbitan monopalmitate, polyoxyethylene (20) sorbitan monostearate, polyoxyethylene (40) stearate, polyoxyethylene (50) stearate, polyoxyethylene esters of mixed fatty and resin acids, polyoxyethylene (20) palmitate, polyethylene glycol monolaurate, polyethylene glycol monooleate, polyethylene glycol ricinoleate, polyethylene glycol monostearate, polyethylene glycol distearate, polyoxyethylene (25) stearate, polyoxyethylene (40) stearate, polyoxyethylene (25) castor oil, polyoxyethylene (52) castor oil, polyoxyethylene (9) laurate, polyoxyethylene (15) tallate, polyoxyethylene (9) lauryl ether, polyoxyethylene (12) lauryl ether, polyoxyethylene (23) lauryl ether, polyoxyethylene (6) tridecyl ether, polyoxyethylene (10) tridecyl ether, polyoxyethylene (10) oleyl ether, polyoxyethylene (20) oleyl ether, polyoxyethylene (50) oleyl ether, polyoxyethylene (15) cetyl stearyl ether, polyoxyethylene (20) stearyl ether, polyoxyethylene (30) stearyl ether, polyoxyethylene (8) tridecyl ether, polyoxyethylene (9) nonyl phenyl ether, and polyoxyethylene (21) coconut ester. As examples of the block copolymer surfactants is the family of surfactants manufactured by BASF/Wyandotte and solid under the trademark "Pluronic[R]". These surfactants are polyethylene oxide—polypropylene oxide block copolymers and having the following general formula:

$$HO\!-\!(CH_2CH_2-O)_x-(\underset{CH_3}{CH}-CH_2-O)_y-(CH_2-CH_2ßO)_z H$$

wherein the sum of x and z is an integer from 1 to 212 and y is an integer from 16 to 69.

These compounds have a multiplicity of functional groups and accordingly, a very large number of modifications is possible. As pointed out above, mixtures of said compounds can also be used. Any amounts of the polyethylene oxide surfactants in combination may be employed so long as the combined weight thereof is within the ranges of surfactant(s) given above.

Surfactants, other than the essential polyethylene oxide-containing materials referred to above, may also be added to the reaction mixture for the purpose of improving the porosity of the vinyl resin particles or for otherwise modifying or controlling the internal structure, or skin structure, of the vinyl resin particles. Surfactants employed for this purpose are chosen on the basis of their Hydrophile-Lipophile Balance (HLB) values and include all the general classes of compounds listed above, even though the polyethylene oxide segment length is of no importance with respect to these additional surfactants. Also, useful surfactants are those compounds from the sorbitan ester family or the polyol families, as well as the polyvinyl alcohols, which do not contain polyethylene oxide segments. As examples of such surfactants there may be named sorbitan trioleate, sorbitan tristearate, sorbitan monooleate, sorbitan monopalmitate, and Alcotex®, which is 72.5% hydrolyzed, polyvinyl acetate. The satisfactory surfactants for improving the vinyl resin porosity and internal structure of the polymer particles will have an HLB in the range of 2 to 19 and preferably an HLB in the range 2 to 6. These surfactants, which are added to enhance monomer droplet stabilization and polymer particle porosity, can be employed in any relative amounts so long as the polyethylene oxide containing surfactant is added within the ranges specified hereinabove.

When employing the polyethylene oxide containing surfactants alone, a skin is formed around the

polymer particle. However, this skin is so thin that plasticizers can penetrate it when making polymer compounds. On the other hand, when a surfactant, which does not contain a polyethylene oxide segment, is added to the system, the skin on the polymer particle has holes in it which improves the plasticizer uptake rate. It must be emphasized, however, that the polyethylene oxide segment containing surfactant must be present in order to obtain the required stability of the reaction medium or mixture.

As has been pointed out previously, it is most important to neutralize the reaction medium, and mainly the dispersant therein, in order to insure the stabilization of monomer droplets during the subsequent stirred reaction period. That is to say, the manner of forming the monomer emulsion or dispersion is most important and the point at which the alkali solution is added to the emulsion, in order to get the desired yield value in the polymerization medium, is critical. It has been found that if this procedure is reversed in order, that is, by adding the alkali solution first and then forming the emulsion, the resultant monomer droplets do not have the resistance to droplet sticking that is characteristic of these systems even though the appropriate polyethylene oxide surfactants are present. This was demonstrated by two test runs that were made using the following recipe in both runs wherein the parts are by weight:

| | |
|---|---|
| Water (demineralized) | 200 parts |
| Vinyl chloride | 100 parts |
| [(1)]Dispersant | 0.12 part |
| Nonylphenoxypoly(30)ethyleneoxy ethanol | 0.08 part |
| Nonylphenoxypoly(4)ethyleneoxy ethanol | 0.10 part |
| Di-(secondary butyl)peroxydicarbonate | 0.03 part |
| Sodium hydroxide | 0.011 part |

[(1)]Carboxylic form of copolymer of anhydrous acrylic acid and mixture of polyallyl ethers of sucrose containing an average of 3 to 6 allyl ether groups per molecule.

In the first run the alkali was added at the beginning to bring the pH up to 5.0 followed by 35 minutes of emulsification. In the second run, emulsification was done in unneutralized dispersant, before adding the NaOH, followed by a short period of blending in the NaOH. The total emulsification time was the same in both runs. The result was that the second run, wherein the NaOH was added later, was a perfectly normal run when stirred at a speed of rotation of 50 $min^{-1}$ during the reaction. On the other hand, in the first run wherein the NaOH was added at the beginning, stirring at 50 $min^{-1}$ quickly resulted in the emulsion breaking due to droplet sticking and the run had to be aborted within an hour. It should be noted that the emulsification procedure affects only the resistance to droplet sticking and this difference in emulsification procedure is not important unless the reaction is a stirred one, such as in the process of the present invention. In a quiescent reaction, such as described in U.S. Patent No. 3,620,988, the monomer droplets are suspended by the mucilage and do not collide with each other so that the necessity of preventing monomer droplet sticking does not arise. Thus, it can be seen that the choice of the neutralization procedure in the present invention is critical in order to attain the desired objectives.

In addition to the use of sodium hydroxide, other alkali metal hydroxides may be employed, such as potassium hydroxide or lithium hydroxide, and also ammonium hydroxide. It is preferable to add the hydroxides to the emulsion or polymerization medium, after emulsification is complete, by means of an aqueous solution thereof. Satisfactory solutions are those containing from 1.0% to 50.0% by weight of the alkali metal hydroxide or ammonium hydroxide. Preferably, an aqueous solution containing from 10.0% to 25.0% of the hydroxide is employed.

Another very important aspect of the present invention is the type and amount of agitation, or stirring employed, both in forming the polymerization recipe emulsion and during the reaction thereof. Prior to the start of the polymerization reaction, all of the ingredients of the polymerization recipe are agitated or stirred to form an emulsion or dispersion wherein sufficient shear action is used to disperse or suspend the monomer(s) in the reaction medium in the form of tiny droplets. This is referred to as the first stage of agitation. The droplets of monomer(s) should be of such size that when transformed into polymer particles, which are spherical and porous, the same will be of the desired size. The polymer particles produced in accordance with the present invention should have a diameter in the range of 30 µm to 1000 µm. Preferably, for most end uses, the polymer particles will have a diameter in the range of 80 µm to 300 µm.

It is most important to choose and maintain the proper and sufficient agitation throughout the polymerization reaction and the various stages of conversion thereof in order to produce the spherical and porous particles of polymer having the proper or desired size. Various means can be employed to get and maintain the proper agitation and shearing action. The reaction vessel or polymerizer is made of stainless steel or glass lined and fitted with a heating and cooling jacket and having a rotatable shaft mounted

centrally thereof. On said shaft are mounted one or more three-pronged agitator blades, the prongs of which are preferably curved and pitched, that is, are contoured. Of course, blades with more or less than three prongs may be used. Further, baffles are mounted internally of the reaction vessel which gives an up and down, or pumping, action to the reaction medium in addition to the circular motion thereof. One or more baffles are employed mounted on the inner wall of the reactor or adjacent thereto.

The amount and manner of agitation desired or necessary to obtain the desired results will vary depending upon the particular monomer or monomers being polymerized. Also, the particular polymer particle size desired in the end product. This means that the speed of rotation of the rotatable shaft carrying the agitator blades must be regulated within certain prescribed limits. There are many variables involved in obtaining the optimum conditions for any particular polymerization recipe, such as, for example, the size of the reactor, the number of blades and prongs thereon, as well as the shape thereof, which will dictate the speed of rotation to be employed in obtaining the desirable particle size, as well as the desired porosity of the polymer particles. In the usual case, using a polymerization reactor having a capacity of 113,55 l (30 gallons), a speed of rotation, with a plurality of agitator blades, such as one of the Pfaudler type, in the range of 60 $min^{-1}$ to 150 $min^{-1}$ is satisfactory. It must be borne in mind, however, that as the reactor capacity is increased or decreased, adjustment in the diameter width and pitch of the blades must be made in order to achieve the desired agitation and shear action. This adjustment can readily be made by those skilled in the art without undue difficulty. It should also be noted that the agitation and shear action will also be influenced by the monomer(s) being polymerized and the temperature of the polymerization reaction.

In the present invention, it is not only important to choose the proper agitation, or proper speed of rotation, but the agitation is done in stages wherein the speed of rotation varies in each stage. This can be referred to as agitation ramping of a sort. As pointed out above, the first stage of agitation is that of forming the dispersion or emulsion of the ingredients prior to the start of polymerization. In the next stage, or second stage, agitation or stirring is employed but at a rate lower than the first stage. The second stage commences with the start of the polymerization reaction and continues until a conversion of monomer(s) to polymer of 10.0% to 30.0%. Thereafter, in the third stage, the stirring is increased but the rate is not above the rate of stirring in the first stage. The third stage continues to completion of the reaction which will be a conversion of 60.0% to 90.0%.

The range of speed of rotation of the agitator in the first stage, wherein the polymerization dispersion or emulsion is formed, using a Pfaudler or like agitator, has been set out above. In the second stage, in the first part of the polymerization reaction, the speed of rotation of the agitator will be up to 1/4 of the value of speed of rotation employed in the first stage. In the third or final stage the speed of rotation will be up to a maximum which is equal to the value employed in the first stage. To give an example, keeping in mind that the size of the reactor has a great influence on the value of the speed of rotation, when polymerizing vinyl chloride, in accordance with the present invention and using a three liter reactor, a value of 600 $min^{-1}$ will be used in the first stage, a value of 70 $min^{-1}$ is used in the second stage from 0% to 30% conversion, and a value of 400 $min^{-1}$ is used in the third stage from 60% to 90% conversion of the reaction.

Due to the exothermic nature of the reaction, it is necessary to agitate the reaction mixture in order to facilitate heat removal. In fact, this is one of the main problems with a totally quiescent polymerization reaction wherein the heat removal is difficult and very expensive. The advantage of the present invention is that, by virtue of the surfactant system employed, the polymerization medium can be agitated to varying degrees throughout the entire reaction period.

When using stirring, as in the present process, the polymer particles produced have an average particle size and size distribution substantially the same as corresponding polymers made quiescently. However, the polymer particles of the instant invention have a substantially higher porosity than the quiescently produced polymers. For example, using the same recipe and the same final conversion conditions, a quiescently produced polymer had a porosity, measured with a mercury porosimeter of 0.1052 $cm^3 \cdot g^{-1}$ at 86% conversion while a polymer, produced using stirring at a rotation number of 1 $min^{-1}$ up to 30% conversion and then of 50 $min^{-1}$ to 86% conversion, had a porosity of 0.2213 $cm^3 \cdot g^{-1}$. Similar results have always been obtained regardless of the surfactant system employed.

The polymerization process of the present invention may be carried out at any temperature which is normal for the monomeric material to be polymerized. Usually, a temperature in the range of 30°C to 100°C will be employed with most known polymerizable monomeric materials, as set out hereinabove. Preferably, a temperature in the range of 40°C to 70°C is employed. The temperature is controlled during the polymerization process by keeping the reaction medium in contact with cooling surfaces. This is accomplished by passing a cooling medium, such as water, brine, and the like, through the jacket surrounding the reaction vessel or polymerizer. The cooling is necessary since most all of the polymerization reactions are exothermic in nature. It is understood, of course, that, where necessary, a heating medium can be circulated through the jacket.

One of the problems encountered in the polymerization of unsaturated monoolefinic monomers is the undesirable polymer buildup that occurs on the interior surfaces of the reactor. This buildup of polymers interferes with heat transfer, decreases productivity, and adversely affects polymer quality. Various means have been proposed to alleviate polymer buildup, such as coating of the internal surfaces of the polymerization reactor prior to conducting the polymerization process therein. However, in the use of the process of the invention, unexpectedly, polymer buildup is substantially eliminated without the need of

coating the reactor surfaces or adding a polymer buildup inhibitor to the polymerization recipe. It is not known why the present invention reduces polymer buildup, but the advantage thereof will be readily apparent to those skilled in the art.

In order to rate the buildup in the various polymerizations of the present invention, as particularly set forth in the specific examples which follow hereinafter, a rating scale has been devised with respect to paper and sandy buildup. In a regular suspension polymerization process, where normal amounts of both types of buildup occur, the reactor is given a rating of 1.5. Any rating below 1.0 is good or a definite improvement. In other words, a rating of 0.0 is perfect, and so on.

To further illustrate the present invention, the following specific examples are given, it being understood that this is merely intended in an illustrative and not a limitative sense. In the examples, all parts and percents are by weight unless otherwise indicated.

Example I

In this example, a stainless steel three liter reactor equipped with a 2 blade helix agitator was employed. In addition to the dispersant, 2 surfactants were used. The following recipe was employed:

| Ingredient | Parts |
|---|---|
| Vinyl chloride | 100 |
| Water (demineralized) | 400 |
| Dispersant[(1)] | 0.24 |
| Pluronic P-123[R] (water-soluble) | 0.30 |
| Pluronic L-61[R] (oil-soluble) | 0.50 |
| Sodium hydroxide (25%) | 0.0212 |
| Di-secondary butyl peroxydicarbonate (SBP) | 0.03 |

[(1)]Polyacrylic acid crosslinked with 0.2—0.3 part/100 monomer of allyl pentaerythritol

First, the catalyst (SBP) and the oil-soluble surfactant (Pluronic L-61[R]) were dissolved in the vinyl chloride and stored at 0°C. The reactor was then charged with the water and dispersant and the water-soluble surfactant (Pluronic P-123[R]) was added thereto. The reactor was evacuated and the agitator rotated at a rotation number of 600 $min^{-1}$ with the agitator running, the vinyl chloride mixture was added and the stirring continued until the vinyl chloride was emulsified into the proper size droplets. The reactor was then filled with water containing the dispersant in the same proportion as in the original mixture. The temperature was raised to the reaction temperature (55°C) and the sodium hydroxide was injected into the reactor. Thereafter the agitator speed was reduced to 70 $min^{-1}$ and held there until 20—30% conversion was reached. Then the agitator speed was increased to 400 $min^{-1}$ and held there until 70% conversion of the reaction is reached. The dispersant in water mixture was continuously added to the reactor as the volume decreased due to formation of polymer in order to keep the reactor full. The time of reaction was 4.5 hours at which time the reactor was cooled rapidly and the polymer slurry removed. The pH of the slurry was 5.1. The reactor was examined for polymer buildup with the following rating: Paper buildup 0.9 and Sandy buildup 0.9. Tests were run on the recovered and dried polymer with the following results:

| | |
|---|---|
| Average particle size | 111.5 μm |
| Particle size distribution | 33.7% |
| Porosity | 0.242 $cm^3 \cdot g^{-1}$ |
| Powder mix time[(1)] | 638 seconds |

[(1)]Powder mix time is the time in seconds it takes the dry polymer to absorb plasticizer.

The porosity was measured with a mercury porosimeter. The polymer produced was spherical and unagglomerated.

Example II

In this example two runs were made using the same recipe in order to compare the porosity of the

polymer particles when produced by the present invention and when produced quiescently, i.e., without stirring. The recipe used was as follows:

| Ingredient | Parts |
|---|---|
| Vinyl chloride | 100 |
| Water (demineralized) | 800 |
| Dispersant[(1)] | |
| Igepal CO-880[R(2)] (water-soluble) | 0.08 |
| Igepal CO-430[R(3)] (oil-soluble) | 0.10 |
| Sodium hydroxide (25%) | 0.58 ml |
| Di-secondary butyl peroxydicarbonate (SBP) | 0.06 |

[(1)]Polyacrylic acid crosslinked with 0.2—0.3 part/100 monomer of allyl pentaerythritol.
[(2)]Nonylphenoxy poly (30) ethyleneoxy ethanol.
[(3)]Nonylphenoxy poly (4) ethyleneoxy ethanol.
(Note: The Igepal® surfactants are made and sold by GAF Corp., Chemical Products).

The procedure of Example I was followed except for the agitation. In both runs the agitator was operated at a speed of 600 $min^{-1}$ to emulsify the vinyl chloride into the proper droplet size. In one run (quiescent) the agitation was stopped at the beginning of the reaction and no further stirring was employed. In the other run, the agitator was run a speed of 1 $min^{-1}$ up to 30% conversion and then at 50 $min^{-1}$ until completion of the reaction (86% conversion). The reactor was examined, in each case, upon completion to determine the polymer buildup. The porosity of the polymers was measured with a mercury porosimeter. The results were as follows:

| Run | Quiescent | Stirred |
|---|---|---|
| Buildup | | |
| Paper | 0.5 | 0.5 |
| Sandy | 0.0 | 0.0 |
| Porosity | 0.1052 $cm^3 \cdot g^{-1}$ | 0.2213 $cm^3 \cdot g^{-1}$ |

As can be seen, the porosity was substantially higher (over 100% higher) when using the present invention.

Example III

In this example, two runs were made to show the effect of using one surfactant in the system which does not contain a polyethylene oxide (PEO) segment. When using PEO containing surfactants, a skin is formed around the polymer particle. Two runs were made to demonstrate the difference, particularly with respect to Powder Mix Time. The recipes employed were as follows:

| Run No. | 1 | 2 |
|---|---|---|
| Ingredient | Parts | Parts |
| Vinyl chloride | 100 | 100 |
| Water (demineralized) | 150 | 150 |
| Dispersant[1] | 0.12 | 0.12 |
| Igepal CO-730[R(2)] (water-soluble) | 0.57 | 0.08 |
| Igepal CO-210[R(3)] (oil-soluble) | 0.12 | — |
| Alcotex®[4] | — | 0.03 |
| Sodium hydroxide (25%) | 0.22 ml | 0.23 ml |
| Di-secondary butyl peroxydicarbonate | 0.02 | 0.02 |

(1)Polyacrylic acid crosslinked with 0.2—0.3 part/100 monomer of allyl pentaerythritol.
(2)Nonylphenoxy poly (15) ethyleneoxy ethanol.
(3)Nonylphenoxy poly (1.5) ethyleneoxy ethanol.
(4)72.5% hydrolyzed polyvinyl acetate.

The procedure of Example I was followed except for the agitation. In Run No. 1, the agitator was operated at a speed of 600 $min^{-1}$ to emulsify the vinyl chloride. After addition of the NaOH, the agitator speed was adjusted to a speed of 50 $min^{-1}$ until 20% conversion was reached. Then the agitator speed was raised to 400 $min^{-1}$ and held there until completion of the reaction (70% conversion). The only difference in Run No. 2 was that the agitator was operated at a speed of 400 $min^{-1}$ during emulsification and at 65 $min^{-1}$ in the second stage. The reactor was examined, in each case, upon completion of the reaction to determine the polymer buildup. The powder mix time of the polymers was measured and the results were as follows:

| Run No. | 1 | 2 |
|---|---|---|
| Buildup | | |
| Paper | 0.5 | 0.0 |
| Sandy | 0.0 | 1.0 |
| Powder mix time (seconds) | 544 | 382 |

It can readily be seen from these results that the polymer buildup was still relatively low but the Powder Mix Time was vastly improved when part of the recipe was replaced with a non PEO segment containing surfactant (Alcotex[R]). This is attributed to the fact that the skin structure of the polymer particles is substantially modified. The skin, instead of being continuous, now has holes in it leading to the porous interior of the polymer particle. This greatly improves the plasticizer uptake rate. The holes in the skin were observed with a scanning electron microscope (SEM).

The present invention has many advantages, chief among which is the production of highly porous and spherical particles of polymer. This in turn enhances the plasticizer uptake of the polymer. In addition, polymer buildup in the reactor is substantially reduced thus affording more efficient heat transfer. Numerous other advantages of the present invention will be apparent to those skilled in the art.

**Claims**

1. A process for producing spherical particles of polymer having high porosity by polymerizing monomers of low water-solubility in an aqueous medium in the presence of a catalyst and a water-insoluble dispersant, characterized by polymerizing one or more ethylenically unsaturated monomers having at least one terminal $CH_2=C<$ group in the form of discrete droplets in an aqueous reaction medium containing

a monomer-soluble free radical yielding catalyst,

a dispersant comprising a water-insoluble, crosslinked polymer of one or more carboxylic acid monomers with a polyunsaturated crosslinking monomer having a plurality of terminally unsaturated polymerizable groups, and

at least one surfactant containing one or more poly (ethylene oxide) segments, by

a) agitating said medium to form droplets of monomer(s) therein at a temperature below the reaction temperature,

b) adding a water-soluble base to said medium to partially neutralize the reaction medium and mainly the dispersant,

c) polymerizing said monomer(s) in a first stage at a temperature in the range of 30 to 100°C with agitation at a speed below that at which the dispersion was formed,

d) continuing the polymerization at said temperature and agitation to a conversion of 10 to 30%,

e) then increasing the agitation in a second stage to a level not more than that at which the dispersion was formed at the same temperature as in said first stage until the reaction is run to a conversion of 60 to 90%, and

f) recovering the spherical porous particles of polymer having a diameter in the range of 30 to 1000 µm, whereby polymer buildup on the surfaces of the reactor is substantially reduced.

2. A process as defined in claim 1 wherein the monomer is vinyl chloride.

3. A process as defined in claim 1 wherein the dispersant is employed in the range of 0.02% to 2.0% by weight, based on the weight of the monomer(s).

4. A process as defined in claim 1 wherein the surfactant is employed in the range of 0.005% to 1.0% by weight, based on the weight of the monomer(s).

5. A process as defined in claim 1 wherein the dispersant is a crosslinked interpolymer of acrylic acid.

6. A process as defined in claim 1 wherein the dispersant is polyacrylic acid crosslinked with 0.2 to 0.3 part/100 parts of monomer of allyl pentaerythritol.

7. A process as defined in claim 1 wherein the surfactant is a combination of an oil-soluble and a water-soluble surfactant.

8. A process as defined in claim 1 wherein the pH of the reaction medium is in the range of 4.0 to 7.0.

9. A process as defined in claim 1 wherein the surfactants are nonylphenoxy poly (4) ethyleneoxy ethanol and nonylphenoxy poly (30) ethyleneoxy ethanol.

10. A process as defined in claim 1 wherein the surfactants are nonylphenoxy poly (15) ethyleneoxy ethanol and nonylphenoxy poly (1.5) ethyleneoxy ethanol.

**Patentansprüche**

1. Verfahren zur Herstellung kugelförmiger Teilchen eines Polymers mit hoher Porosität durch Polymerisieren von Monomeren mit geringer Wasserlöslichkeit in einem wässrigen Medium in Gegenwart eines Katalysators und eines wasserunlöslichen Dispergiermittels, gekennzeichnet durch Polymerisieren eines oder mehrerer ethylenisch ungesättigter Monomerer mit wenigstens einer endständigen $CH_2{=}C{<}$-Gruppe in Form diskreter Tröpfchen in einem wässrigen Reaktionsmedium, das

einen monomerlöslichen, freie Radikale bildenden Katalysator,

ein Dispergiermittel aus einem wasserunlöslichen vernetzten Polymer eines oder mehrerer Carbonsäure-Monomerer mit einem polyungesättigten vernetzenden Monomer mit einer Mehrzahl endständig ungesättigter polymerisierbarer Gruppen und

wenigstens ein ein oder mehrere Poly(ethylenoxid)segmente enthaltendes grenzflächenaktives Mittel enthält, durch

a) Rühren des Mediums zur Bildung von Tröpfchen des Monomers (der Monomeren) in demselben bei einer Temperatur unterhalb der Reaktionstemperatur,

b) Hinzufügen einer wasserlöslichen Base zu dem Medium zur teilweisen Neutralisation des Reaktionsmediums und hauptsächlich des Dispergiermittels,

c) Polymerisieren des Monomers (der Monomeren) in einer ersten Stufe bei einer Temperatur im Bereich von 30 bis 100°C unter Rühren mit einer Geschwindigkeit unterhalb derjenigen, bei der die Dispersion gebildet wurde

d) Fortseten der Polymerisation bei dieser Temperatur und Rühren bis zu einer Umwandlung von 10 bis 30%,

e) anschließendes Steigern des Rührens in einer zweiten Stufe bis zu einem Wert, der nicht größer ist als derjenige, bei dem die Dispersion gebildet wurde, bei der gleichen Temperatur wie in der ersten Stufe, bis die Reaktion zu einem Umwandlungsgrad von 60 bis 90% fortgeführt worden ist, und

f) Gewinnung der kugelförmigen porösen Teilchen des Polymers mit einem Durchmesser im Bereich von 30 bis 1000 µm, wodurch ein Ansetzen des Polymers an den Oberflächen des Reaktors wesentlich vermindert wird.

2. Verfahren nach Anspruch 1, dadurch gekennzeichnet, daß das Monomer Vinylchlorid ist.

3. Verfahren nach Anspruch 1, dadurch gekennzeichnet, daß das Dispergiermittel in dem Bereich von 0,02 bis 2,0 Gew.-%, bezogen auf das Gewicht des Monomers (der Monomeren), eingesetzt wird.

4. Verfahren nach Anspruch 1, dadurch gekennzeichnet, daß das grenzflächenaktive Mittel in dem Bereich von 0,005 bis 1,0 Gew.-%, bezogen auf das Gewicht des Monomers (der Monomeren) eingesetzt wird.

5. Verfahren nach Anspruch 1, dadurch gekennzeichnet, daß das Dispergiermittel ein vernetztes Interpolymer der Acrylsäure ist.

6. Verfahren nach Anspruch 1, dadurch gekennzeichnet, daß das Dispergiermittel Polyacrylsäure ist, die mit 0,2 bis 0,3 Teilen Allylpentaerythrit pro 100 Teile des Monomers vernetzt ist.

7. Verfahren nach Anspruch 1, dadurch gekennzeichnet, daß das grenzflächenaktive Mittel eine Kombination aus einem öllöslichen und einem wasserlöslichen grenzflächenaktiven Mittel ist.

8. Verfahren nach Anspruch 1, dadurch gekennzeichnet, daß der pH des Reaktionsmediums im Bereich von 4,0 bis 7,0 liegt.

9. Verfahren nach Anspruch 1, dadurch gekennzeichnet, daß die grenzflächenaktiven Mittel Nonylphenoxypoly(4)ethylenoxyethanol und Nonylphenoxypoly(30)ethylenoxyethanol sind.

10. Verfahren nach Anspruch 1, dadurch gekennzeichnet, daß die grenzflächenaktiven Mittel Nonylphenoxypoly(15)ethylenoxyethanol und Nonylphenoxypoly(1,5)ethylenoxyethanol sind.

**Revendications**

1. Procédé de production de particules sphériques de polymère ayant une porosité élevée en polymérisant des monomères de faible solubilité dans l'eau dans un milieu aqueux en présence d'un catalyseur et d'un dispersant insoluble dans l'eau, caractérisé en ce que l'on polymérise un ou plusieurs monomères à insaturation éthylénique comportant au moins un groupe $CH_2=C<$ terminal sous forme de gouttelettes discrètes dans un milieu réactionnel aqueux contenant

un catalyseur produisant des radicaux libres soluble dans le monomère,

un dispersant comprenant un polymère réticulé insoluble dans l'eau d'un ou plusieurs monomères d'acide carboxylique avec un monomère réticulant polyinsaturé comportant une pluralité de groupes polymérisables à insaturation terminale, et

au moins un tensio-actif contenant un ou plusieurs segments de poly(oxyde d'éthylène), en

a) agitant le dit milieu pour y former des gouttelettes de monomère(s) à une température inférieure à la température de la réaction,

b) ajoutant une base hydrosoluble au dit milieu pour neutraliser partiellement le milieu réactionnel et principalement le dispersant,

c) polymérisant le(s) dit(s) monomère(s) dans une première étape à une température de 30 à 100°C sous agitation à une vitesse inférieure à celle à laquelle s'est formée la dispersion,

d) poursuivant la polymérisation à la dite température et sous la dite agitation pour obtenir un taux de transformation de 10 à 30%,

e) augmentant alors l'agitation dans une deuxième étape jusqu'à un niveau ne dépassant pas celui à laquelle s'est formée la dispersion à la même température que dans la dite première étape jusqu'à ce que la réaction atteigne un taux de transformation de 60 à 90%, et

f) récupérant les particules poreuses sphériques de polymère ayant un diamètre de 30 à 1000 µm ce qui réduit ainsi essentiellement l'accumulation de polymère sur les surfaces du réacteur.

2. Procédé selon la revendication 1, dans lequel le monomère est le chlorure de vinyle.

3. Procédé selon la revendication 1, dans lequel le dispersant est employé un quantité de 0,02% à 2,0% en poids, par rapport au poids du (des) monomère(s).

4. Procédé selon la revendication 1, dans lequel le tensio-actif est employé en quantité de 0,005% à 1,0% en poids, par rapport au poids du (des) monomère(s).

5. Procédé selon la revendication 1, dans lequel le dispersant est un interpolymère réticulé d'acide acrylique.

6. Procédé selon la revendication 1, dans lequel le dispersant est un acide polyacrylique réticulé avec 0,2 à 0,3 partie/100 parties de monomère d'allylpentaérythritol.

7. Procédé selon la revendication 1, dans lequel le tensio-actif est une combinaison d'un tensio-actif oléosoluble et d'un tensio-actif hydrosoluble.

8. Procédé selon la revendication 1, dans lequel le pH du milieu réactionnel est de 4,0 à 7,0.

9. Procédé selon la revendication 1, dans lequel les tensio-actifs sont le nonylphénoxyéthanol poly(4)éthoxylé et le nonylphénoxyéthanol poly(30) éthoxylé.

10. Procédé selon la revendication 1, dans lequel les tensio-actifs sont le nonylphénoxyéthanol poly(15)éthoxylé et le nonylphénoxyéthanol poly(1,5)éthoxylé.